# FASCICULE DE BREVET EUROPEEN

(11) **EP 4 025 846 B1**
(45) Date de publication et mention de la délivrance du brevet: **25.06.2025**
(21) Numéro de dépôt: 20757389.0
(22) Date de dépôt: 28.07.2020
(51) Int. Cl.: F25B 39/04, B60H 1/00, F25B 40/02, F28B 9/08, F28F 9/007, F28D 1/04, F28D 21/00, F28F 9/00, F28F 9/02, B60H 1/32

(54) **SYSTEME D'ECHANGE THERMIQUE POUR VEHICULE AUTOMOBILE**
WÄRMETAUSCHSYSTEM FÜR EIN KRAFTFAHRZEUG
HEAT-EXCHANGE SYSTEM FOR A MOTOR VEHICLE

(30) Priorité: 02.09.2019 FR 1909634
(43) Date de publication de la demande: 13.07.2022
(73) Titulaire: VALEO SYSTEMES THERMIQUES, 78320 Le Mesnil Saint-Denis (FR)
(72) Inventeur: TOURNOIS, Rémi, 78322 Le Mesnil Saint-Denis Cedex (FR); BIREAU, Fabien, 78322 Le Mesnil Saint-Denis Cedex (FR); ANDRE, Stephan, 78322 Le Mesnil Saint-Denis Cedex (FR); MARCHADIER, Xavier, 78322 Le Mesnil Saint-Denis Cedex (FR); ROMANET, Lydia, 78322 Le Mesnil Saint-Denis Cedex (FR); FERNANDES PEREIRA DA VENDA, Fernando, 78322 Le Mesnil Saint-Denis Cedex (FR)
(74) Mandataire: Valeo Systèmes Thermiques
(86) Numéro de dépôt international: PCT/FR2020/051392
(87) Numéro de publication internationale: WO 2021/044088

(56) Documents cités:
- DE-A1- 10 226 851
- US-A1- 2015 101 778
- US-A1- 2017 246 934

## Description

La présente invention concerne un système d'échange thermique disposé sur un circuit de distribution de fluides et comportant au moins une pluralité d'échangeurs thermiques chacun apte à réaliser un échange de calories entre un flux d'air traversant le système d'échange thermique et un fluide circulant dans cet échangeur thermique.

Il est connu d'agencer en face avant du véhicule un tel système thermique comportant notamment un condenseur apte à assurer un échange de chaleur entre un fluide réfrigérant circulant dans le condenseur et un flux d'air frais incident en provenant de l'extérieur du véhicule. Il est connu de réaliser le condenseur d'un seul tenant avec une série de plaques empilées formant entre elles des lames de circulation du fluide réfrigérant.

Le condenseur peut être associé à un réservoir ou bouteille de stockage du fluide réfrigérant en phase liquide qui est apte à compenser d'éventuelles fuites dans le circuit de climatisation, ainsi qu'à une portion de sous-refroidissement permettant de réaliser un sous-refroidissement du fluide réfrigérant en sortie du réservoir de stockage. Le réservoir de stockage sépare la phase liquide de la phase gazeuse du fluide réfrigérant et assure la filtration et la déshydratation du fluide réfrigérant.

Dans un agencement connu, le réservoir de stockage du fluide réfrigérant est intégré dans le volume du condenseur, dans l'empilement de plaques transversalement à celles-ci. De manière alternative, le réservoir de stockage du fluide réfrigérant peut être intégré par brasage entre les deux blocs d'échange de chaleur et être indémontable. L'opération de brasage du module complet en une seule fois est une opération d'assemblage complexe à réaliser.

Dans un autre agencement, le réservoir de stockage est rapporté latéralement par des assemblages mécaniques appropriés sur le condenseur et reste démontable. Une telle configuration ne permet pas d'assurer une circulation optimale car elle nécessite d'utiliser des tubulures de liaisons encombrantes entre le bloc de condensation, le réservoir de stockage et le bloc de sous-refroidissement. Il en résulte une augmentation de l'encombrement du module complet, un risque accru de fuite et une augmentation des coûts de fabrication.

L'invention s'inscrit dans ce contexte et vise à améliorer le rendement du système d'échange thermique en améliorant la surface d'échange des échangeurs thermiques tout en réduisant l'encombrement et en favorisant un montage pratique du système d'échange thermique.

A cet effet, l'invention propose un système d'échange thermique **,** comme défini par la revendication indépendante annexée, apte à assurer une circulation efficace du fluide réfrigérant depuis une sortie du condenseur vers une bouteille collectrice de fluide réfrigérant puis dans un échangeur de sous-refroidissement. A cet effet, l'invention propose un lien de connexion direct entre une sortie de la bouteille collectrice et une entrée de l'échangeur de sous-refroidissement.

L'invention a pour objet un système d'échange thermique disposé dans une face avant d'un véhicule automobile comportant une pluralité d'échangeurs thermiques, chacun configuré pour réaliser un échange thermique entre un flux d'air et un fluide circulant dans l'échangeur thermique, comprenant au moins un condenseur et un échangeur de sous-refroidissement configuré pour sous-refroidir un fluide réfrigérant présent à l'état liquide en sortie de condenseur. Le condenseur est configuré pour être traversé par le flux d'air et permettre le refroidissement du fluide réfrigérant à l'état gazeux jusqu'à sa condensation à l'état liquide.

Selon une caractéristique de l'invention, le condenseur comprend une bouteille collectrice du fluide réfrigérant et il existe un lien de connexion direct entre une sortie de la bouteille collectrice et une entrée de l'échangeur de sous-refroidissement indépendant.

Par la suite, les termes « amont » et « aval » sont utilisés pour décrire la disposition d'un élément constitutif du système de d'échange thermique par rapport au sens de circulation du fluide réfrigérant depuis une entrée du condenseur en direction de l'échangeur thermique et en passant par la bouteille collectrice.

De même, les termes « avant » et « arrière » sont utilisés pour décrire la disposition d'un élément constitutif du système d'échange thermique par rapport au sens de circulation du flux d'air depuis l'extérieur du véhicule vers un compartiment intérieur de face avant du véhicule. Les échangeurs thermiques sont avantageusement composés d'un faisceau de tubes de circulation du fluide réfrigérant parallèles entre eux et entre lesquels circule le flux d'air étant entendu qu'entre ces tubes peuvent être positionnées des ailettes ou lamelles en vue d'augmenter la surface d'échange thermique entre l'air passant entre deux tubes adjacents et le fluide passant dans chaque tube. Les échangeurs thermiques, de forme sensiblement parallélépipédique rectangle, sont disposés en regard d'une ouverture de calandre de face avant du véhicule de manière à ce que des première et seconde surfaces frontales d'échange, parallèles entre elles et s'étendant selon un plan d'allongement des échangeurs thermiques, soient successivement traversées par le flux d'air entrant incident.

Selon une série de caractéristiques du système d'échange thermique selon réalisations exemplaires de l'invention , on prévoit, en plus des caractéristiques définies par la revendication indépendante 1 annexée, que :
L'échangeur de sous-refroidissement est agencé dans un plan différent de celui du condenseur associé, par rapport à la direction de circulation de l'air passant à travers le système d'échange thermique.

Le condenseur et l'échangeur de sous-refroidissement sont agencés selon un empilement axial par rapport au sens de circulation du flux d'air, l'empilement axial étant définit par une direction d'empilement de l'avant vers l'arrière selon le sens de circulation du flux d'air.

La bouteille collectrice s'étend, selon un axe d'allongement longitudinal, parallèlement à une surface latérale verticale du condenseur, perpendiculaire aux première et seconde surfaces frontales dudit condenseur, et est agencée en amont de l'échangeur de sous-refroidissement par rapport au sens de circulation du fluide réfrigérant, la bouteille collectrice présente une forme sensiblement cylindrique et s'étend entre deux extrémités longitudinales d'entrée et de sortie selon une direction principale d'allongement longitudinal, en outre la bouteille peut être contenir d'un filtre pour éliminer les impuretés et/ou d'un dessiccateur pour absorber l'humidité résiduelle dans les boucles de circulation du fluide réfrigérant;

L'échangeur de sous-refroidissement est agencé en aval de la bouteille collectrice selon le sens de circulation du fluide réfrigérant et présente, selon une direction verticale, définie par le plan d'allongement des échangeurs thermiques, une dimension inférieure à une dimension du condenseur de sorte qu'il ne recouvre que partiellement le condenseur et que l'entrée de l'échangeur de sous-refroidissement est disposée à même hauteur que l'extrémité de sortie de la bouteille collectrice selon la direction verticale précédemment définie.

L'échangeur de sous-refroidissement est agencé en arrière du condenseur par rapport au sens de circulation du flux d'air, avantageusement, l'échangeur thermique est agencé dans un même plan d'allongement qu'un radiateur et en aval de celui-ci.

Selon une série de caractéristiques du lien de connexion direct entre la bouteille collectrice et l'échangeur de sous-refroidissement selon l'invention pouvant être prises seules ou en combinaison, on prévoit que :

Le lien de connexion est une tubulure réfrigérante métallique reliée à l'extrémité de sortie de la bouteille collectrice par l'intermédiaire d'une première bride de connexion et à l'échangeur de sous-refroidissement par l'intermédiaire d'une deuxième bride de connexion.

La première bride est formée par un bouchon disposé à l'extrémité de sortie ouverte de la bouteille collectrice.

L'invention a pour autre objet un véhicule automobile comprenant un système d'échange thermique tel que précédemment décrit. Selon une caractéristique de l'invention, le véhicule peut être électrique et/ou hybride.

D'autres caractéristiques et avantages de l'invention apparaitront plus clairement à la lecture de la description détaillée d'un mode de réalisation de l'invention, donné ci-après à titre d'exemple illustratif et non limitatif et s'appuyant sur les figures annexées, dans lesquelles on a illustré un système d'échange thermique disposé en face avant d'un véhicule automobile selon l'invention et parmi lesquelles :
la [Figure 1] est une vue en perspective d'un système d'échange thermique pour véhicule automobile selon l'invention équipé d'une pluralité d'échangeurs thermiques, parmi lesquelles un radiateur et un échangeur de sous-refroidissement disposés l'un au-dessus de l'autre en face avant du système d'échange thermique sont particulièrement visibles, et d'une bouteille collectrice ;
la [Figure 2] est une vue en perspective, selon un angle différent de celui de la [Figure 1], du système d'échange thermique dans laquelle on a retiré le radiateur pour rendre plus visible le condenseur et l'échangeur de sous-refroidissement ;
la [Figure 3] est une vue de détail d'une portion inférieure du système d'échange thermique selon l'invention, le radiateur étant ici retiré, rendant visible une connexion directe entre la bouteille collectrice et un échangeur de sous-refroidissement ;
la [Figure 4] est une vue de dessous du lien de connexion direct représenté sur la [Figure 3], seule une bride d'entrée de l'échangeur de sous-refroidissement étant illustrée.

Si les figures exposent l'invention de manière détaillée pour sa mise en œuvre, elles peuvent, bien entendu, servir à mieux définir l'invention le cas échéant. De même, il est rappelé que, pour l'ensemble des figures, les mêmes éléments sont désignés par les mêmes repères. On comprendra également que le mode de réalisation de l'invention illustré par les figures est donné à titre d'exemple non limitatif. Par conséquent, d'autres configurations du système d'échange thermique selon l'invention peuvent être réalisées, notamment par variations de l'agencement et du dimensionnement des éléments qui le composent, notamment des échangeurs thermiques, de la bouteille collectrice et du lien de connexion direct.

Dans la suite de la description, les directions longitudinales, verticales ou transversales se réfèrent à l'orientation du système d'échange thermique selon l'invention, représentées parle trièdre LVT. La direction longitudinale L correspond à la direction principale du flux d'air amené à traverser le système d'échange thermique, et les directions verticale V et transversale T correspondent à des droites perpendiculaires à cette direction longitudinale.

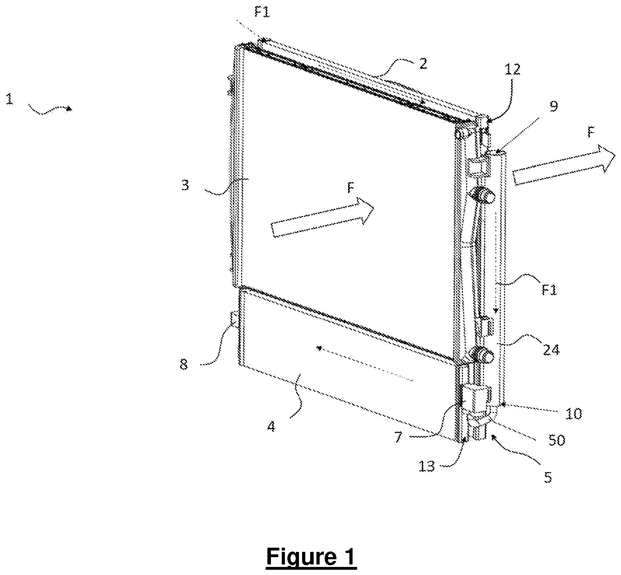

La [Figure 1] illustre un système d'échange thermique 1 d'un système de conditionnement thermique d'un flux d'air F pour véhicule automobile. Le système d'échange thermique 1 selon l'invention comporte une pluralité d'échangeurs thermiques 2, 3, 4 configurés pour réaliser un échange thermique entre un flux d'air F et un fluide circulant dans l'échangeur thermique.

Plus particulièrement, le système d'échange thermique 1 selon l'invention comporte au moins un circuit de fluide réfrigérant F1 comprenant un condenseur 2, un radiateur 3 et un échangeur de sous-refroidissement 4 indépendant, également appelé « subcooler » en anglais. Le système d'échange thermique 1 est destiné à être agencé dans une face avant du véhicule en regard d'une ouverture de calandre de manière à ce que les échangeurs thermiques puissent être traversés par le flux d'air F en provenance de l'extérieur du véhicule.

Le système d'échange thermique comporte par ailleurs une bouteille collectrice 24 agencée entre le condenseur 2 et l'échangeur de sous-refroidissement 4.

Dans la suite de la description, les termes « amont/aval » et « avant/arrière » sont utilisés pour décrire la disposition d'un élément constitutif du système de d'échange thermique 1 par rapport au sens de circulation d'un fluide F, F1 circulant dans le système d'échange thermique 1. Ainsi, les termes « amont » et « aval » sont compris par rapport au sens de circulation du fluide réfrigérant F1, schématisé par des flèches en traits pointillés, dans le condenseur 2 et l'échangeur de sous-refroidissement 4 en passant par la bouteille collectrice 24. Les termes « avant » et « arrière » sont compris par rapport au sens de circulation du flux d'air F, schématisé par une flèche en trait plein, depuis l'extérieur du véhicule vers un compartiment intérieur de face avant du véhicule.

Chaque échangeur thermique 2, 3, 4 présente une forme sensiblement parallélépipédique rectangle définie par des surfaces d'échange parallèles entre elles. Les surfaces d'échange de ces échangeurs thermiques s'étendent selon un plan d'allongement vertical et transversal dudit échangeur thermique et sont délimitées transversalement par des boîtes de distribution qui permettent la circulation du fluide sur toute l'étendue de la surface d'échange. La surface d'échange de chaque échangeur thermique 2, 3, 4 est avantageusement composé d'un faisceau de tubes de circulation du fluide réfrigérant F1 parallèles entre eux et entre lesquels peuvent être positionnées des ailettes ou lamelles en vue d'augmenter la surface d'échange thermique.

Par ailleurs, les échangeurs thermiques sont agencés longitudinalement, tel que cela va être repris en détail ci-après, de sorte que le radiateur 3 et l'échangeur de sous-refroidissement 4 sont disposés dans un même plan vertical et transversal, en amont du condenseur 2 qui est disposé parallèlement aux deux autres échangeurs thermiques 3, 4. Tous ces échangeurs thermiques sont disposés les uns par rapport aux autres de manière à pouvoir être successivement traversées par le flux d'air F entrant.

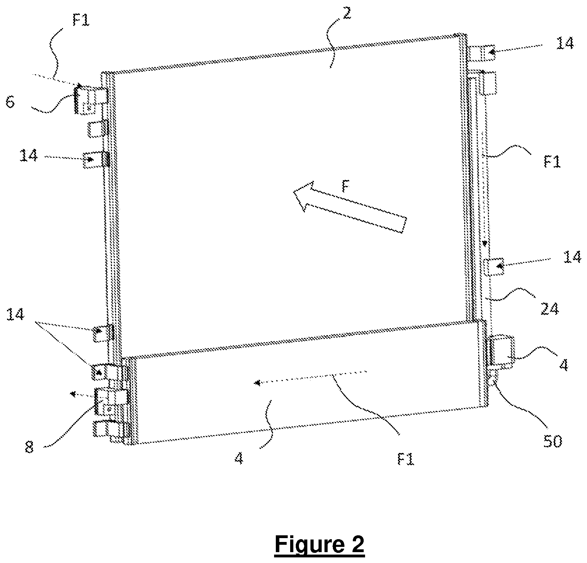

Tel qu'illustré sur les figures 1 et 2, l'échangeur de sous-refroidissement 4 présente, selon la direction verticale V, une dimension de valeur inférieure à celle d'une dimension correspondante du condenseur 2 de sorte que l'échangeur de sous-refroidissement ne recouvre que partiellement le condenseur.

Le système d'échange thermique 1 selon l'invention est particulier en ce qu'il comprend un système de connexion 5 direct et compact entre le condenseur 2 et l'échangeur de sous-refroidissement 4, via la boîte collectrice 24.

Le condenseur 2 est configuré pour réaliser un échange thermique entre le fluide réfrigérant F1 précédemment décrit et le flux d'air F extérieur de sorte que le fluide réfrigérant chaud à l'état gazeux pénétrant dans le condenseur 2 par une tubulure d'entrée 6 est refroidi au niveau de la surface d'échange avec l'air, se condense et ressort dans un état liquide/gazeux.

L'échangeur de sous-refroidissement 4 est agencé en série du condenseur 2 sur le circuit du fluide réfrigérant afin de sous-refroidir le fluide réfrigérant F1 en phase liquide. Le fluide réfrigérant sous phase liquide est susceptible de pénétrer dans l'échangeur de sous-refroidissement 4. Tel que décrit précédemment, l'échangeur de sous-refroidissement est décalé longitudinalement par rapport au condenseur 2, le condenseur 2 et l'échangeur de sous-refroidissement 4 étant agencés selon un empilement axial défini par une direction d'empilement de l'avant vers l'arrière déterminée par le sens de circulation du flux d'air F.

L'échangeur de sous-refroidissement 4 comporte une bride d'entrée 7 configurée pour recevoir en entrée de l'échangeur de sous-refroidissement le fluide réfrigérant et une bride de sortie 8 reliée fluidiquement au circuit de fluide réfrigérant du véhicule, ici non représenté.

Avantageusement, le circuit de fluide réfrigérant F1 comprend la bouteille collectrice 24, également appelée « réservoir de stockage », qui est agencée entre le condenseur 2 et l'échangeur de sous-refroidissement 4 selon le sens de circulation du fluide réfrigérant F1. La bouteille collectrice 24 est avantageusement reliée à la sortie du condenseur 2, non visible sur les figures, et elle est configurée pour séparer la phase liquide de la phase gazeuse du fluide réfrigérant F1, pour compenser d'éventuelles variations de volume dans le circuit de conditionnement d'air et pour assurer la filtration et la déshydratation du fluide réfrigérant F1 qui la traverse.

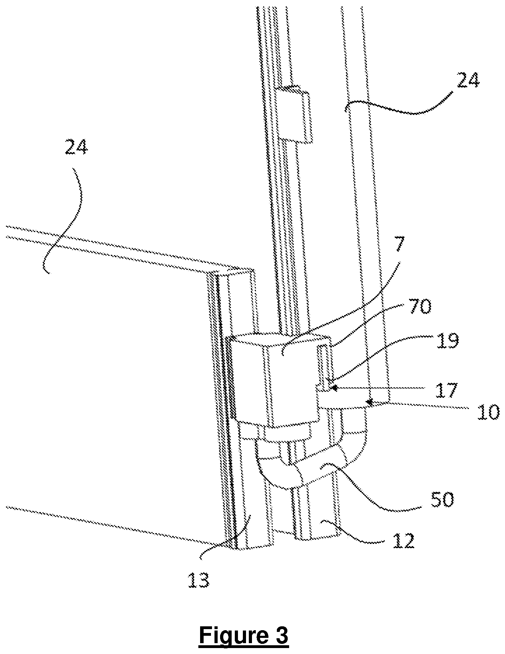

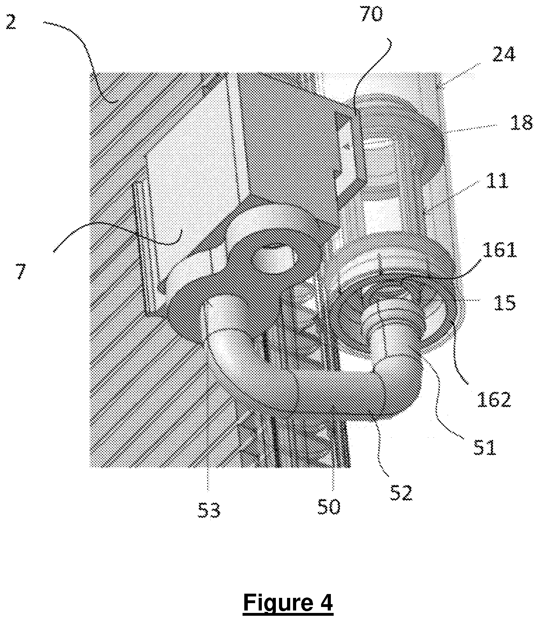

Plus particulièrement, et tel que cela est visible sur la [Figure 1] ou sur la [Figure 3] et la [Figure 4], la bouteille collectrice 24 présente une forme sensiblement cylindrique et elle s'étend entre deux extrémités verticales d'entrée 9 et de sortie 10 selon une direction principale d'allongement verticale V. Avantageusement, un ensemble de traitement 11 du fluide réfrigérant, comportant notamment un dessicateur et un filtre métallique associé sous forme de treillis (ici non visible sur les figures) est disposé à l'intérieur de la bouteille collectrice 24, et plus particulièrement dans la partie inférieure, proche de l'extrémité de sortie, de la bouteille collectrice. Cet ensemble a pour fonction d'éliminer les impuretés et d'absorber l'humidité résiduelle dans les boucles de circulation du fluide réfrigérant F1 afin d'éviter toute interaction chimique entre d'éventuelles molécules d'eau et le fluide réfrigérant F1 (par exemple un fluide de type R134a) susceptible d'endommager les autres composants du circuit de conditionnement d'air.

La bouteille collectrice 24 est ici fixée sur le condenseur sur un bord d'extrémité transversal de ce dernier. En d'autres termes, la bouteille collectrice 24 s'étend, selon son axe d'allongement vertical, parallèlement à une surface latérale verticale 12 dudit condenseur 2. Avantageusement, la bouteille collectrice 24 est rendue solidaire du condenseur 2 par brasage.

La bride d'entrée 7 est de manière analogue disposée sur une surface latérale verticale 13 de l'échangeur de sous-refroidissement 4. Et la dimension verticale des condenseur et échangeur de sous-refroidissement et la disposition de la bouteille collectrice est telle que la bride d'entrée 7 de l'échangeur de sous-refroidissement 4 est disposée à proximité, à même hauteur, de l'extrémité de sortie 10 de la bouteille collectrice 24 selon la direction verticale précédemment définie.

Les différents échangeurs thermiques comportent des pattes de fixation 14 rendant possible leur fixation sur un élément structurel du véhicule, ou bien sur un cadre commun assurant leur position relative les uns par rapport aux autres.

Le système de connexion 5 direct et compact entre le condenseur 2 et l'échangeur de sous-refroidissement 4, via la boîte collectrice 24, s'étend ainsi en regard des surfaces latérales verticale 12, 13 voisines de ces deux échangeurs thermiques.

Le système de connexion 5 comporte une tubulure 50, ici métallique, présentant une forme coudée en U, avec successivement une première portion 51 reliée fluidiquement à l'extrémité de sortie 10 de la bouteille collectrice 24 et s'étendant dans le prolongement vertical de cette bouteille, une deuxième portion 52 prolongeant ladite première portion 51 longitudinalement en direction de l'échangeur de sous-refroidissement 4, avec une première portion coudée reliant la première 51 et la deuxième portion 52 entre elles, et une troisième portion 53 reliée fluidiquement à la bride d'entrée 7 de l'échangeur de sous-refroidissement et s'étendant dans le prolongement vertical de cette bride d'entrée, avec une deuxième portion coudée reliant la deuxième 52 et la troisième portion 53 entre elles.

La [Figure 3] et la [Figure 4] illustrent une portion du système d'échange thermique 1 selon l'invention qui rend plus visible le système de connexion compact 5 entre la bouteille collectrice 24 et l'échangeur de sous-refroidissement 4.

Tel que précédemment décrit, le système de connexion compact 5 s'étend verticalement et longitudinalement entre l'extrémité de sortie 10 de la bouteille collectrice 24 et la bride d'entrée 7 de l'échangeur de sous-refroidissement 4. La [Figure 4] illustre plus particulièrement la connexion de la tubulure 50 formant partie du système de connexion compact 5 sur l'extrémité de sortie 10 par l'intermédiaire d'un moyen de raccordement approprié 15 configuré pour fermer la bouteille collectrice 24 à son extrémité de sortie.

Il convient de noter que la tubulure 50 est représentée sur la [Figure 4] dans une position avant sa fixation sur l'extrémité de sortie de la bouteille collectrice, avec la première portion 51 de la tubulure à distance du moyen de raccordement 15 qui vient d'être évoqué La tubulure 50 de forme coudée est rendue étanche à ses connexions avec la bouteille collectrice 24 et la bride de l'échangeur de sous-refroidissement par des opérations de brasage du système de connexion compact 5.

Le condenseur 2 et l'échangeur de sous-refroidissement 4 peuvent être maintenus solidaires l'un à l'autre par l'intermédiaire d'un dispositif d'accrochage 17 latéral, formé ici en partie par la bride d'entrée de l'échangeur de sous-refroidissement. Plus particulièrement, le dispositif d'accrochage 17 comporte ici une fente 18, formée verticalement et transversalement dans un appendice 70 de la bride d'entrée 7, et une nervure 19 formant saillie de la boîte collectrice ou de la surface latérale verticale 12 du condenseur 2. L'appendice 70 de la bride d'entrée est tournée vers la boîte collectrice 24 lorsque les échangeurs thermiques sont assemblés dans le système selon l'invention, et la fente 18 est dimensionnée pour recevoir la nervure. La coopération de formes assure un positionnement relatif de l'échangeur de sous-refroidissement 4 par rapport au condenseur 2, notamment selon la direction longitudinale. Il convient de noter que cette position longitudinale relative des échangeurs thermiques est ici essentielle à conserver du fait de l'agencement longitudinal de la tubulure 50 brasée.

La [Figure 4] détaille par ailleurs la portion inférieure, c'est-à-dire l'extrémité de sortie 10, de la bouteille collectrice 24 montée de façon adjacente au condenseur 2, en rendant visible l'intérieur de la bouteille collectrice au voisinage de cette extrémité de sortie, par transparence de l'enveloppe externe de la bouteille collectrice. Tel que décrit précédemment, la bouteille collectrice comporte un ensemble de traitement 11 disposé dans la portion inférieure, tel qu'illustrée, l'ensemble de traitement comportant un dessicateur et un filtre. L'ensemble de traitement 11 est disposé de telle sorte que le fluide sortant par l'extrémité de sortie est passé par l'ensemble de traitement.

Le moyen de raccordement 15 est disposé en travers de l'ouverture formée par l'extrémité de sortie, en aval de l'ensemble de traitement par rapport au sens de circulation de fluide réfrigérant. Ce moyen de raccordement 15 comporte plus particulièrement une base formant bouchon 16 de la bouteille collectrice avec une collerette externe 161 disposée contre la face interne de l'enveloppe de la bouteille collectrice 24, et une collerette interne 162 formant en son centre un trou de passage pour le fluide et formant un manchon pour le brasage de la tubulure 50.

Une fois le système de connexion compact 5 raccordé d'une part à l'extrémité de sortie 10 de la bouteille collectrice et d'autre part à la bride d'entrée 7 de l'échangeur de sous-refroidissement 4, le fluide réfrigérant est apte à passer de la bouteille collectrice 24 à l'échangeur de sous-refroidissement, via l'ensemble de traitement 11 et la tubulure 50, afin de lui faire subir une passe de sous-refroidissement.

La [Figure 3] et la [Figure 4] illustrent bien que la bride d'entrée 7 de l'échangeur de sous-refroidissement 4 est disposée sensiblement à même hauteur que l'extrémité de sortie 10 de la bouteille collectrice 24 selon la direction verticale précédemment définie. On comprend que cette configuration permet un écoulement optimisé du fluide réfrigérant F1 entre la bouteille collectrice 24 et l'échangeur de sous-refroidissement 4.

L'invention concerne également un véhicule automobile équipé d'un système d'échange thermique 1 tel que précédemment décrit. Le système d'échange thermique 1 selon l'invention peut trouver un intérêt particulier dans des véhicules électriques ou hybrides pour lesquels il est nécessaire de pouvoir recharger les batteries de stockage électrique rapidement par l'intermédiaire de bornes de recharge mettant en œuvre des puissances électriques élevées. La chaleur générée dans les batteries par ce processus de recharge doit pouvoir être évacuée pour éviter de les endommager. Le système d'échange thermique 1 selon l'invention permet de regrouper la pluralité des échangeurs évoqués précédemment, et notamment la présence d'un condenseur et d'un échangeur de sous refroidissement agencés en série par rapport à un circuit de fluide réfrigérant avec une bouteille collectrice interposée entre eux, dans un encombrement maitrisé, ce qui permet d'optimiser la dimension des surfaces d'échange et donc d'améliorer les performances de refroidissement.

La description qui précède explique clairement comment l'invention permet d'atteindre les objectifs qu'elle s'est fixée et notamment de proposer un système d'échange thermique comprenant au moins un condenseur et une bouteille collectrice reliée par un système de connexion direct et compact à un échangeur de sous-refroidissement indépendant, dans le but d'améliorer les échanges thermiques, de réduire le volume d'encombrement et de simplifier l'assemblage du système d'échange thermique.

L'invention ne saurait se limiter aux modes de réalisation spécifiquement donnés dans ce document à titre d'exemples non limitatifs, et s'étend en particulier à tous moyens tombant sous la définition donnée par la revendication indépendante 1 annexée.

## Revendications

1. Système d'échange thermique (1) pour véhicule automobile comportant une pluralité d'échangeurs thermiques (2, 4), chacun configuré pour réaliser un échange thermique entre un flux d'air (F), traversant principalement longitudinalement le système d'échange thermique, et un fluide réfrigérant (F1) circulant dans l'échangeur thermique (2, 4), la pluralité d'échangeurs thermiques comprenant au moins un condenseur (2) et un échangeur de sous-refroidissement (4) configuré pour sous-refroidir le fluide réfrigérant (F1) présent à l'état liquide en sortie de condenseur (2), **caractérisé en ce que** le condenseur (2) comprend une bouteille collectrice (24) du fluide réfrigérant (F1) configuré pour au moins séparer la phase liquide de la phase gazeuse du fluide réfrigérant et **en ce qu'**il existe un système de connexion (5) direct entre une sortie (10) de la bouteille collectrice (24) et une entrée (7) de l'échangeur de sous-refroidissement (4), ledit système de connexion (5) étant brasé sur la bouteille collectrice (24) et sur une bride d'entrée (7) de l'échangeur de sous refroidissement de manière à former une connexion étanche, **caractérisé en ce que** l'échangeur de sous-refroidissement (4) présente, selon une direction verticale, une dimension de valeur inférieure à celle d'une dimension correspondante du condenseur (2), de sorte que l'échangeur de sous-refroidissement ne recouvre verticalement que partiellement le condenseur (2) et de sorte que l'entrée (7) de l'échangeur de sous-refroidissement (4) est disposée sensiblement à même hauteur que la sortie (7) de la bouteille collectrice (24) selon ladite direction verticale, **en ce que** le système de connexion (5) direct comporte une tubulure coudée reliant fluidiquement la sortie (10) de la bouteille collectrice (24) à la bride d'entrée (7) de l'échangeur de sous-refroidissement, la tubulure (50) étant agencée selon un plan d'allongement principal longitudinal et vertical, et **en ce qu'**il comporte un dispositif d'accrochage (17) verrouillant la position relative de l'échangeur de sous-refroidissement (4) par rapport à la bouteille collectrice au moins selon la direction longitudinale.

2. Système d'échange thermique (1) selon la revendication 1, **caractérisé en ce que** le condenseur (2) et l'échangeur de sous-refroidissement (4) sont agencés selon un empilement longitudinal, parallèlement à la direction principale du flux d'air (F) amené à traverser successivement l'échangeur de sous-refroidissement et le condenseur (2).

3. Système d'échange thermique (1) selon l'une quelconque des revendications 1 ou 2, **caractérisé en ce que** la bouteille collectrice (24) s'étend, selon un axe d'allongement principal vertical, parallèlement à une surface latérale (12) verticale du condenseur (2).

4. Système d'échange thermique (1) selon l'une des revendications précédentes, **caractérisé en ce que** la tubulure (50) est reliée à la sortie (10) de la bouteille collectrice par l'intermédiaire d'un moyen de raccordement (15) qui comporte au moins un bouchon (16) disposé en travers de l'extrémité de sortie (10) de la bouteille collectrice (3).

5. Système d'échange thermique (1) selon l'une quelconque des revendications précédentes, **caractérisé en ce que** la tubulure de connexion (5) présente une forme en U, avec deux portions coudées reliant l'une à l'autre trois portions (51, 52, 53) fluidiquement continues.

6. Véhicule automobile comprenant un système d'échange thermique (1) selon l'une quelconque des revendications 1 à 5.

## Patentansprüche

1. Wärmetauschsystem (1) für ein Kraftfahrzeug, umfassend eine Vielzahl von Wärmetauschern (2, 4), die jeweils dazu konfiguriert sind, einen Wärmetausch zwischen einem Luftstrom (F), der das Wärmetauschsystem hauptsächlich in Längsrichtung durchquert, und einem Kältemittel (F1), das in dem Wärmetauscher (2, 4) zirkuliert, durchzuführen, wobei die Vielzahl von Wärmetauschern mindestens einen Kondensator (2) und einen Unterkühlungswärmetauscher (4), der dazu konfiguriert ist, das Kältemittel (F1), das am Auslass des Kondensators (2) im flüssigen Zustand vorliegt, zu unterkühlen, beinhaltet, **dadurch gekennzeichnet, dass** der Kondensator (2) eine Sammelflasche (24) für das Kältemittel (F1) beinhaltet, die dazu konfiguriert ist, mindestens die Flüssigphase von der Gasphase des Kältemittels zu trennen, und dass es ein Direktverbindungssystem (5) zwischen einem Auslass (10) der Sammelflasche (24) und einem Einlass (7) des Unterkühlungswärmetauschers (4) gibt, wobei das Verbindungssystem (5) an die Sammelflasche (24) und an einen Einlassflansch (7) des Unterkühlungswärmetauschers angelötet ist, um eine dichte Verbindung zu bilden, **dadurch gekennzeichnet, dass** der Unterkühlungswärmetauscher (4) entlang einer vertikalen Richtung eine Abmessung mit einem Wert aufweist, der kleiner als derjenige einer entsprechenden Abmessung des Kondensators (2) ist, sodass der Unterkühlungswärmetauscher den Kondensator (2) vertikal nur teilweise bedeckt und sodass der Einlass (7) des Unterkühlungswärmetauschers (4) entlang der vertikalen Richtung im Wesentlichen auf derselben Höhe angeordnet ist wie der Auslass (7) der Sammelflasche (24), dass das Direktverbindungssystem (5) ein gebogenes Rohr umfasst, das den Auslass (10) der Sammelflasche (24) mit dem Einlassflansch (7) des Unterkühlungswärmetauschers verbindet, wobei das Rohr (50) gemäß einer längsgerichteten und vertikalen Haupterstreckungsebene eingerichtet ist, und dass es eine Einhakvorrichtung (17) umfasst, die die relative Position des Unterkühlungswärmetauschers (4) mit Bezug auf die Sammelflasche mindestens entlang der Längsrichtung arretiert.

2. Wärmetauschsystem (1) nach Anspruch 1, **dadurch gekennzeichnet, dass** der Kondensator (2) und der Unterkühlungswärmetauscher (4) gemäß einer Längsschichtung parallel zu der Hauptrichtung des Luftstroms (F) eingerichtet sind, welcher so geführt wird, dass er den Unterkühlungswärmetauscher und den Kondensator (2) nacheinander durchquert.

3. Wärmetauschsystem (1) nach einem der Ansprüche 1 oder 2, **dadurch gekennzeichnet, dass** sich die Sammelflasche (24) entlang einer vertikalen Haupterstreckungsachse parallel zu einer vertikalen seitlichen Oberfläche (12) des Kondensators (2) erstreckt.

4. Wärmetauschsystem (1) nach einem der vorhergehenden Ansprüche, **dadurch gekennzeichnet, dass** das Rohr (50) mit dem Auslass (10) der Sammelflasche mittels eines Anschlussmittels (15) verbunden ist, das mindestens einen Verschluss (16) umfasst, der quer über das Auslassende (10) der Sammelflasche (3) angeordnet ist.

5. Wärmetauschsystem (1) nach einem der vorhergehenden Ansprüche, **dadurch gekennzeichnet, dass** das Verbindungsrohr (5) eine U-Form aufweist, wobei zwei gebogene Abschnitte drei fluidisch zusammenhängende Abschnitte (51, 52, 53) miteinander verbinden.

6. Kraftfahrzeug, das ein Wärmetauschsystem (1) nach einem der Ansprüche 1 bis 5 beinhaltet.

## Claims

1. Heat exchange system (1) for a motor vehicle, having a plurality of heat exchangers (2, 4), which are each configured to exchange heat between an air flow (F), passing mainly longitudinally through the heat exchange system, and a refrigerant fluid (F1) circulating in the heat exchanger (2, 4), the plurality of heat exchangers comprising at least one condenser (2) and one subcooling exchanger (4) configured to subcool the refrigerant fluid (F1) that is present in the liquid state at the outlet of the condenser (2), **characterized in that** the condenser (2) comprises a bottle (24) for collecting the refrigerant fluid (F1) that is configured to at least separate the liquid phase from the gas phase of the refrigerant fluid and **in that** there is a direct connection system (5) between an outlet (10) of the collecting bottle (24) and an inlet (7) of the subcooling exchanger (4), said connection system (5) being brazed to the collecting bottle (24) and to an inlet flange (7) of the subcooling exchanger so as to form a sealed connection, **characterized in that** the subcooling exchanger (4) has, in a vertical direction, a dimension of value smaller than that of a corresponding dimension of the condenser (2), such that, vertically, the subcooling exchanger only partially covers the condenser (2) and such that the inlet (7) of the subcooling exchanger (4) is disposed substantially at the same height as the outlet (7) of the collecting bottle (24) in said vertical direction, **in that** the direct connection system (5) has a bent pipe that fluidically connects the outlet (10) of the collecting bottle (24) to the inlet flange (7) of the subcooling exchanger, the pipe (50) being arranged in a longitudinal and vertical main plane of elongation, and **in that** it has an attachment device (17) that locks the relative position of the subcooling exchanger (4) relative to the collecting bottle at least in the longitudinal direction.

2. Heat exchange system (1) according to Claim 1, **characterized in that** the condenser (2) and the subcooling exchanger (4) are arranged in a longitudinal stack, parallel to the main direction of the air flow (F) that is caused to pass successively through the subcooling exchanger and the condenser (2).

3. Heat exchange system (1) according to either one of Claims 1 and 2, **characterized in that** the collecting bottle (24) extends, along a vertical main axis of elongation, parallel to a vertical lateral surface (12) of the condenser (2).

4. Heat exchange system (1) according to one of the preceding claims, **characterized in that** the pipe (50) is connected to the outlet (10) of the collecting bottle via a connecting means (15) that has at least one end-cap (16) disposed across the outlet end (10) of the collecting bottle (3).

5. Heat exchange system (1) according to any one of the preceding claims, **characterized in that** the connection pipe (5) is U-shaped, with two bent portions connecting three fluidically continuous portions (51, 52, 53) to one another.

6. Motor vehicle comprising a heat exchange system (1) according to any one of Claims 1 to 5.
